# EUROPEAN PATENT APPLICATION

(11) **EP 1 770 481 A2**
(43) Date of publication of application: **04.04.2007**
(21) Application number: 06076733.2
(22) Date of filing: 14.09.2006
(51) Int. Cl.: G06F 3/01

(54) **Method and system for controlling an interface of a device through motion gestures**

(30) Priority: 14.09.2005 US 226167
(71) Applicant: Sorenson Communications, Inc., Salt Lake City, UT 84115 (US)
(72) Inventor: Romriell, Joseph N., Alpine, UT 84004 (US); Shupe, Allen, Sandy, UT 84094 (US); Cupal, Matthew D., Providence, UT 84332 (US)
(74) Representative: van Loon, C.J.J.

(57) **Abstract**

A method, device and video phone for controlling an interface of a device through motion gestures includes entering a command mode when a motion gesture corresponding to a request to enter the command mode is detected in a first video segment. The method further includes executing at least one interface command corresponding to at least one other motion gesture as detected in a second video segment. The device includes an interface including standby and command modes through which a user controls the communication device. The communication device further includes a user motion gesture detector configured to identify motion gestures of a user and direct the interface to transition from standby mode to command mode when the motion gestures in a first video segment correspond to a request to enter the command mode.

## Description

### BACKGROUND OF THE INVENTION

Field of the Invention: The invention relates generally to conveying information through motion gestures, and, more particularly, to control of an interface of a device through the generation of motion gestures.

State of the Art: Interaction with many electronic devices occurs through an interface capable of receiving and processing commands or directives. Conventional computer-based interfaces have relied upon a physical interaction with the computer-based device's operator interface through manipulation of, for example, a keyboard or pointing device (e.g., computer mouse) to select and activate a command. Such interfaces rely upon a conversion of a user's motion (e.g., movement of a computer mouse by a user) which is translated into an electronic movement of a pointer superimposed upon various selection areas of a device's interface.

Another approach for interfacing with a computer-based device's operator interface includes manipulation of a remote control to select and activate a request or command. Such an interface also relies upon a conversion of a user's motion (e.g., movement for initiating activation of buttons on a remote control) which is translated into formation of an encoded signal in the remote control. The remote control sends encoded signals resulting from user motion and converts those transmitted signals into operator interface commands.

Yet another approach for interfacing with a computer-base device's operator interface includes manipulation of a touch sensitive screen to select and activate a request or command. Such an interface also relies upon a conversion of a user's motion (e.g., touch movement for initiating activation of a location detecting grid on the touch sensitive screen) which is translated to select and activate a command or selection. Such interfaces rely upon an indirect conversion of user's motion (e.g., movement for activation of grid coordinates) which is translated into an electronic movement of a pointer superimposed upon various selection areas of an operator interface.

Often times a physical interface such as a pointer, remote control or touch panel are absent, cost-prohibitive, or otherwise unavailable or undesirable. Other times, there may be a community of users (e.g., hearing-impaired users) that are more comfortable interacting through motion gestures and otherwise. Therefore, there is a need for providing a method and system for controlling an interface of a device without a user directly manipulating a physical-motion detection device.

### BRIEF SUMMARY OF THE INVENTION

A method and system for controlling an interface of a device through motion gestures is provided. In one embodiment of the present invention, a method for controlling an interface through motion gestures includes entering a command mode from a standby mode when a motion gesture corresponding to a request to enter the command mode is detected in a first video segment. The method further includes executing at least one interface command corresponding to at least one other motion gesture as detected in a second video segment.

In another embodiment of the present invention, a communication device is provided which includes an interface including standby and command modes through which a user controls the communication device. The communication device further includes a user motion gesture detector configured to identify motion gestures of a user and direct the interface to transition from standby mode to command mode when the motion gestures in a first video segment correspond to a request to enter the command mode.

In a further embodiment of the present invention, a video phone is provided which includes an interface for selecting one or more commands for controlling the video phone. The video phone further includes a camera for capturing video segments for analysis and a user motion gesture detector for controlling the interface through motion gestures.

### BRIEF DESCRIPTION OF THE SEVERAL VIEWS OF THE DRAWINGS

In the drawings, which illustrate what is currently considered to be the best mode for carrying out the invention:

FIG. 1 illustrates a communication system configured to facilitate interaction with a hearing-impaired user, in accordance with an embodiment of the present invention;

FIG. 2 illustrates a simplified block diagram of a hearing-impaired communication system, in accordance with an embodiment of the present invention;

FIG. 3 illustrates a communication device and various operational view segments including time sequences corresponding to mode transitions and command inputs of the device interface, in accordance with an embodiment of the present invention;

FIG. 4 illustrates various operational view segments including time sequences corresponding to mode transitions and command inputs of the device interface, in accordance with another embodiment of the present invention; and

FIG. 5 is a flowchart illustrating a method for controlling an interface through motion gestures, in accordance with an embodiment of the present invention.

### DETAILED DESCRIPTION OF THE INVENTION

In an interactive operating environment, electronic devices are configured to include interfaces through which users interact with the device. Conventional interfaces lack flexibility for users to relate to the device through noncontact and nonverbal means. While all users may benefit from the use of a motion detected interface as described herein, one particular beneficial group of users includes those that are hearing impaired. While various devices and systems find application for the methods and systems of the various embodiments of the present invention, by way of example and not limitation, a hearing-impaired communication system is described.

As used herein, the term "motion gestures" means noncontact expressions such as user extremity movement, facial expression movements and the like. Furthermore, as used herein, detection of "motion gestures" is performed through direct optical and visual analysis of the motion gestures rather than through indirect translation via physical movement of a device such as movement of a computer pointing device or other motion-translating device.

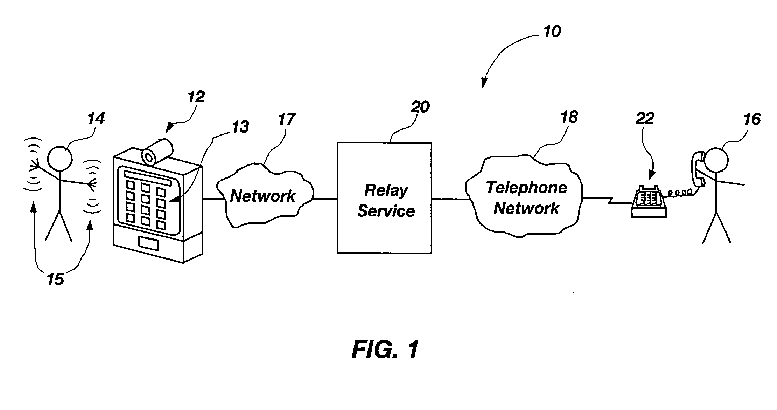

FIG. 1 illustrates a communication system configured to provide a visual interface for communicating with a user. By way of example, the communication system 10 of FIG. 1 includes a communication device 12 configured to include a user interface 13 through which a user 14 (e.g., a hearing-impaired user) controls the communication device 12. The interface 13 is controlled through identification of motion gestures 15 exhibited by the user 14. In one embodiment, the interface 13 enters a command mode from an idle mode through the recognition of motion gestures 15 by the user 14. The command mode is entered when a specific motion gesture 15 performed corresponding to a predefined request to enter the command mode is detected. Specifically, the communication device 12, as controlled by the interface 13 when in standby mode, continuously analyzes a stream of video otherwise known as a first video segment. Upon correlation of the specific motion gesture 15 corresponding with a request by the user 14 to cause the interface 13 of the communication device 12 to enter a command mode, the interface 13 of the communication device 12 transitions from an idle or standby mode to the command mode which enables inputting of commands to the communication device 12 through the interface 13.

Once in command mode, the interface 13 of the communication device 12 is receptive to one or more other motion gestures 15 designating specific commands within the command mode. Specifically, the communication device 12 as controlled by the interface 13, when in command mode, continuously analyzes a stream of video otherwise known as a second video segment. Upon correlation of the specific motion gesture 15 corresponding with a command by the user 14 to cause the interface 13 of the communication device 12 to execute a specific command, the interface 13 of the communication device 12 inputs the identified command into the interface 13 causing the communication device 12 to respond accordingly. In one embodiment, the interface 13 presents a visual indication of various command options which may be selected and confirmed by the user 14. The specifics of various commands and displayed interfaces are described in more detail with respect to the Figures that follow.

By way of example and not limitation, the communication device 12 may further interface with other network elements such as a network 17 which, in the example of a hearing-impaired communication system 10, may further connect with a relay service 20 for providing interpretive services to the hearing-impaired user. The communication system 10 of FIG. 1 is configured to facilitate a communication session between the user 14 who may be hearing-impaired and a hearing-capable user 16. A communication system 10 enables, for example, a hearing-impaired user 14 to engage in conversation through a communication system 10 with a hearing-capable user 16. A communication session between the users is facilitated through the use of various equipments, which are preferably coupled together using one or more networks including a telephone network such as the Public Switch Telephone Network (PSTN) 18. Alternatively, use of the term "telephone network" as used herein also contemplates networks which are compatible and configured to provide communications using digital standards, an example of which includes Voice Over Internet Protocol (VOIP).

To interface a hearing-impaired user into a generally voice-based communication system, interpretive services are employed allowing hearing-impaired users to communicate with an interpreter. If the hearing-impaired user is voice-incapable, then communication with the interpreter occurs primarily through the use of sign language. If the hearing-impaired user is predominantly voice-capable, then communication with the interpreter may be performed by the user expressing themselves through voice signals and "hearing" the interpreter through the use of sign language or other text based interfaces via the communication device 12. For hearing-impaired users, the sign language images are translated or interpreted by a relay service 20 providing a level of relay service herein defined as a "video relay service." When the sign language images are translated by the relay service 20 they are forwarded as voice information over a voice-based communication connection to the hearing-capable user 16.

One means for relaying the communicative expressions of a hearing-impaired user 14 within hearing-impaired communication system 10 incorporates the communication device 12, an example of which is a video phone. The communication device 12 captures and displays, in video form, the communicative expressions exhibited by the hearing-impaired user 14. For a hearing-impaired user, the sign language and/or body language may be interpreted or translated by relay service 20. The hearing-capable user 16 interacts in a conventional manner with relay service 20 through the use of voice-based dialog conveyed over a conventional voice phone 22. The various devices, such as communication device 12 and voice phone 22, are coupled to relay service 20 using one or more networks 17, 18. By way of example, and not limitation, enhanced bandwidth requirements of various communication devices may be better accommodated by providing high bandwidth networks and connections thereto through various enhanced-bandwidth networking technology including DSL, Cable, Ethernet, etc. Network 18 may be implemented according to the standards and bandwidth requirements of voice phone 22 and, as stated, may further be implemented according to digital telephony standards including VOIP.

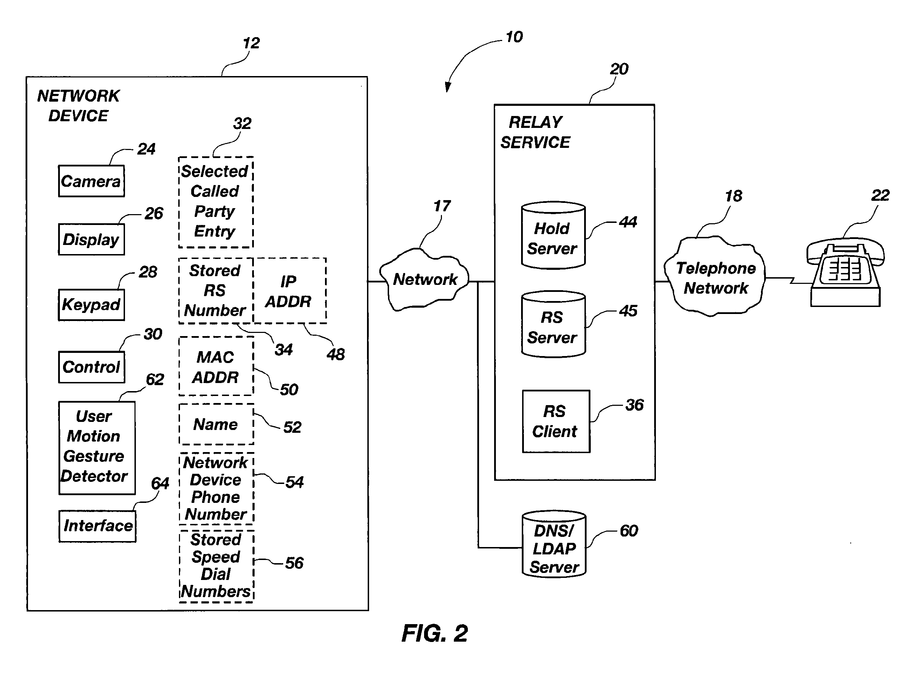

FIG. 2 is a simplified diagram of a communication system 10, in accordance with an embodiment of the present invention. To facilitate the interaction with, for example, a hearing-impaired user, a communication device 12, an example of which is a video phone, includes video components such as a camera 24, for capturing the motion gestures and communicative expressions of a hearing-impaired user and further includes a display or monitor 26 for displaying interface commands identified by a user motion gesture detector 62 from motion gestures identified by the interface 64 and communicative expressions originating from the hearing-capable user as interpreted by a relay service 20. Communication device 12 may further include a keypad 28 or other data entry device configured to enable data entry including the data entry of information as well as the ability to enable a hearing-impaired user to initiate a communication session in a conventional manner by entering a telephone number, or selecting a telephone number or other address from an electronic phonebook or speed dial list as stored within the communication device 12.

A control process 30 in conjunction with the user motion gesture detector 62 analyzes motion gestures from a user and, when a specific motion gesture is identified, interacts with the interface 64 to transition from a standby mode to a command mode. Accordingly, when the interface 64 is in command mode, the communication device 12 is receptive to other motion gestures by the user which may invoke commands such as opening of an electronic phone book and the presentation of stored speed dial phone numbers 56 or population of electronic phonebook as well as the selection of a selected called party number from the electronic phonebook for the initiation of a call. By way of operation in the hearing-impaired example, in response to the identification of a specific command from correlation of another motion gesture from a user, the control process 30 may retrieve a stored relay service number 34, which identifies a specific relay service, and using a protocol, such as DNS or LDAP protocol contacts a DNS or an LDAP server 60 and passes thereto a domain name or stored relay service number 34 and requests therefrom a corresponding IP address 48 which is returned to the communication device 12. The communication device 12 thereafter initiates a call to the relay service 20 over network 17 using, for example, corresponding IP address 48 as returned from the LDAP server 60.

The control process 30 initiates a communication session over network 17 between a communication device 12 and the relay service 20. In one embodiment of the present invention, the communication session between communication device 12 and relay service 20 is, more specifically, initially connected to a hold server 44 within relay service 20. Hold server 44 communicates with a relay service server 45 and when hold server 44 receives an inbound call in the form of a call request for the establishment of a communication session between communication device 12 and relay service 20, hold server 44 notifies relay service server 45 of the intention to establish a communication session between communication device 12 and the conventional voice phone 22 via network 18. The call request may further include a video phone number 54 a MAC address 50, a name 52 and a selected called party number 32. The RS server 45 further includes and maintains a queue for one or more calls originating from communication devices 12 seeking to establish or maintain a communication session utilizing interpretive services as provided within relay services client 36.

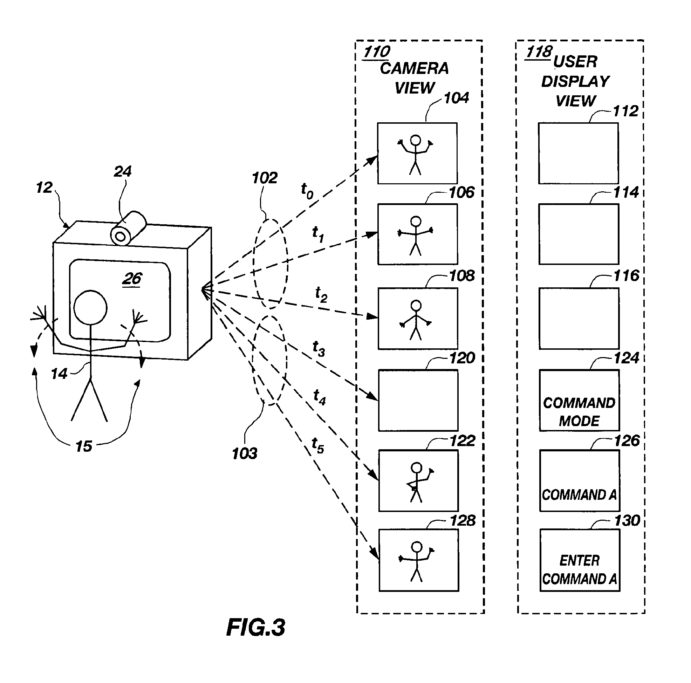

FIG. 3 illustrates a communication device and various operational view segments including time sequences corresponding to mode transitions and command inputs of the device interface, in accordance with an embodiment of the present invention. The communication device 12 includes a camera 24 for receiving and capturing the motion gestures 15 of a user 14 during interaction with the device interface and, in the example of a hearing-impaired communication system, facilitates a video conference session between the user and interpretive services provided by the relay service 20 (FIG. 1 and FIG. 2). The communication device 12 further includes a display 26 for providing feedback to the user 14 regarding the status of the interface mode and may also provide specific commands in the command mode for selection by the user in response to motion gestures corresponding to specific commands. Additionally, in the example of a hearing-impaired communication system, the display further facilitates the video conference session between the user and interpretive services provided by the relay service 20 (FIG. 1 and FIG. 2) as previously described.

In FIG. 3, an operational example of motion gestures input by a user and the corresponding interpretation and respective responses are illustrated. When the motion gesture functionality of the communication device 12 is operational, motion gestures are monitored for specific motion gestures corresponding to a request to enter a command mode and other command directives for the communication device to execute corresponding commands. Specifically, when the communication device 12 is in a standby mode, a first series of images identified as video segment 102 are captured via camera 24 and control process 30 (FIG. 2). The video segment 102 includes one or more images 104, 106, 108 illustrated herein with respect to a camera view 110 of user 14.

When the communication device 12 is in standby mode and the user 14 desires to interact with the communication device 12 via the interface, the user initiates a sequence of motion gestures 15 as illustrated with respect to the sequence of images 104, 106, 108 as illustrated with further respect to the camera view 110. Accordingly, the user motion gesture detector 62 (FIG. 2) evaluates changes in the sequence of images 104, 106, 108 to determine a pattern corresponding to a defined sequence that correlates to a request by the user for the interface to transition to the command mode. During this request by the user 14 to enter the command mode, the display 26 may provide feedback through one or more images 112, 114, 116 illustrated herein with respect to display view 118 of communication device 12. While the present examples illustrate motion gestures to include user extremity motion, more sophisticated implementations of a user motion gesture detector 62 (FIG. 2) may include motion gestures such as facial expressions including lip reading.

When the communication device 12 is in command mode, a second series of images identified as video segment 103 are captured via camera 24 and control process 30 (FIG. 2). The video segment 103 includes one or more images 120, 122 illustrated herein with respect to a camera view 110 of user 14. When the communication device 12 has transitioned into command mode and the user 14 desires to interact with the communication device 12 via the interface, various interface presentations may be presented to enable a user to select one or more commands. To select a specific command, the user initiates one or more motion gestures including a sequence of motion gestures 15 as illustrated with respect to the sequence of images 120, 122 as illustrated with respect to the camera view 110. Accordingly, the user motion gesture detector 62 (FIG. 2) evaluates a state or changes in the sequence of images 120, 122 to determine a pattern corresponding to a defined sequence that correlates to a request by the user for the interface to select a specific command within the command mode. In one embodiment, during this request by the user 14 to select a command, the display 26 may provide feedback through one or more images 124, 126 illustrated herein with respect to display view 118 of communication device 12.

In yet another embodiment, the communication device 12 may further incorporate a motion gesture which confirms or enters the selected command with respect to the motion gestures captured and identified in images 120, 122. Accordingly, the video segment 103 may include one or more images 128 corresponding with the confirmation or entering of the previously selected command. In response to such a confirmation of the selected command, the display 26 may provide feedback through one or more images 130 illustrated herein with respect to display view 118 of communication device 12.

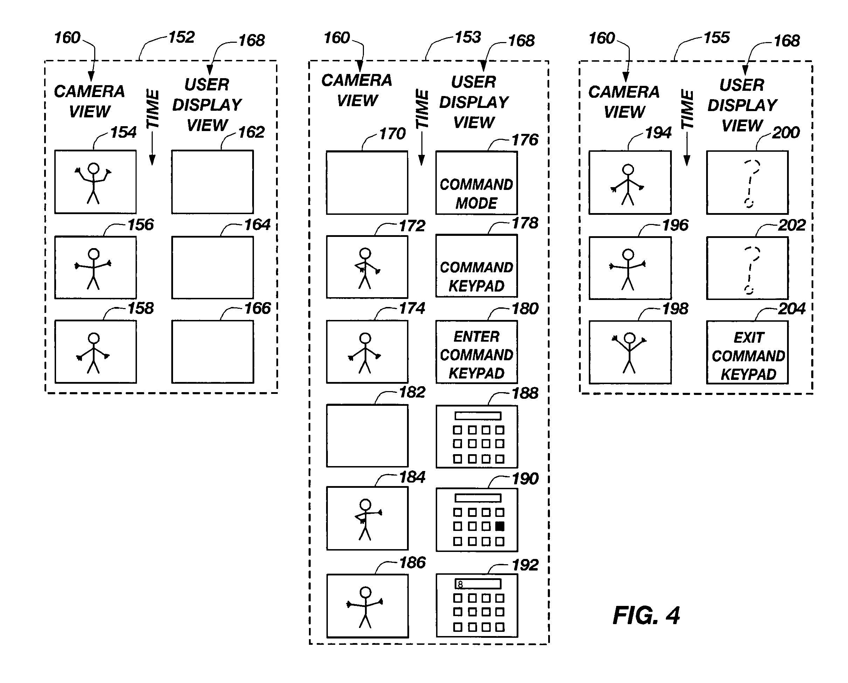

FIG. 4 illustrates various operational view segments including time sequences corresponding to mode transitions and command inputs of the device interface, in accordance with another embodiment of the present invention. In the present embodiment, one embodiment of the command mode displays a depiction of an arrangement of at least one or more available commands. In one example, an arrangement of commands approximates a layout of a control panel such as a remote control that allows a user through motion gestures to negotiate the arrangement of command options in an analogous manner as would be performed on a separate physical remote control device.

In FIG. 4, an operational example of motion gestures input by a user and the corresponding interpretation and respective responses are illustrated. When the motion gesture functionality of the communication device 12 (FIGS. 1-3) is operational, motion gestures are monitored for specific ones corresponding to requesting the interface to enter a command mode and others that correspond to command directives by the user for the communication device to execute corresponding commands. Specifically, when the communication device 12 is in standby mode, a first series of images identified as video segment 152 are captured via camera 24 (FIG. 2 and FIG. 3) and control process 30 (FIG. 2). The video segment 152 includes one or more images 154, 156, 158 illustrated herein with respect to a camera view 160 of user 14 (FIGS. 1-3).

When the communication device 12 (FIGS. 1-3) is in standby mode and the user 14 (FIGS. 1-3) desires to interact with the communication device 12 via a motion gesture detectable interface, the user initiates a sequence of motion gestures 15 (FIG. 1 and FIG. 3) as illustrated with respect to the sequence of images 154, 156, 158 as illustrated with further respect to the camera view 160. Accordingly, the user motion gesture detector 62 (FIG. 2) evaluates changes in the sequence of images 154, 156, 158 to determine a pattern corresponding to a defined sequence that correlates to a request by the user for the interface to transition to the command mode. During this request by the user 14 to enter the command mode, the display 26 (FIG. 2 and FIG. 3) may provide feedback through one or more images 162, 164, 166 illustrated herein with respect to display view 168 of communication device 12.

When the communication device 12 is in command mode, a second series of images identified as video segment 153 are captured via camera 24 and control process 30 (FIG. 2). The video segment 153 includes one or more images 170, 172, 174 illustrated herein with respect to a camera view 160 of user 14. When the communication device 12 has transitioned into command mode and the user 14 desires to interact with the communication device 12 via the interface, various interface presentations may be presented to enable a user to select one or more commands. To select a specific command, the user initiates one or more motion gestures including a sequence of motion gestures 15 as illustrated with respect to the sequence of images 170, 172, 174 as illustrated with further respect to the camera view 160. Accordingly, the user motion gesture detector 62 (FIG. 2) evaluates a state or changes in the sequence of images 170, 172, 174 to determine a pattern corresponding to a defined sequence that correlates to a request by the user for the interface to select a specific command within the command mode. In the present embodiment, when the command is interpreted as a display control panel such as a keypad command, then the display 26 provides feedback through one or more images 176, 178, 180 illustrated herein with respect to display view 168 of communication device 12.

When the communication device 12 is in keypad command mode, another series of images in the video segment 153 are captured via camera 24 and control process 30 (FIG. 2). The video segment 153 may further include one or more images 182, 184, 186 illustrated herein with respect to a camera view 160 of user 14. When the communication device 12 has transitioned into keypad command mode and the user 14 desires to interact with the communication device 12 via the displayed keypad, a virtual keypad via the interface is presented to enable a user to select one or more keypad commands. To select a specific keypad command, the user initiates one or more motion gestures including a sequence of motion gestures 15 as illustrated with respect to the sequence of images 182, 184, 186 as illustrated with respect to the camera view 160. Accordingly, the user motion gesture detector 62 (FIG. 2) evaluates a state or changes in the sequence of images 182, 184, 186 to determine a pattern corresponding to a defined sequence that correlates to a request by the user for the interface to select a specific button or command within the keypad command mode. In the present embodiment, when the keypad command is interpreted as a specific keypad command, then the display 26 may provide feedback (e.g., highlighting the selected button) through one or more images 188, 190, 192 illustrated herein with respect to display view 168 of communication device 12.

When the communication device 12 (FIGS. 1-3) is in command mode and the user 14 (FIGS. 1-3) desires to end the command mode, the interface may automatically end the command mode upon the successful execution of a selected command or the user may initiate a sequence of motion gestures 15 (FIG. 1 and FIG. 3) as illustrated with respect to a video segment 155 of a sequence of images 194, 196, 198 as illustrated with respect to the camera view 160. Accordingly, the user motion gesture detector 62 (FIG. 2) evaluates changes in the sequence of images 194, 196, 198 to determine a pattern corresponding to a defined sequence that correlates to a request by the user for the interface to transition to the standby mode. During this request by the user 14 to enter the standby mode, the display 26 (FIG. 2 and FIG. 3) may provide feedback through one or more images 200, 202, 204 illustrated herein with respect to display view 168 of communication device 12.

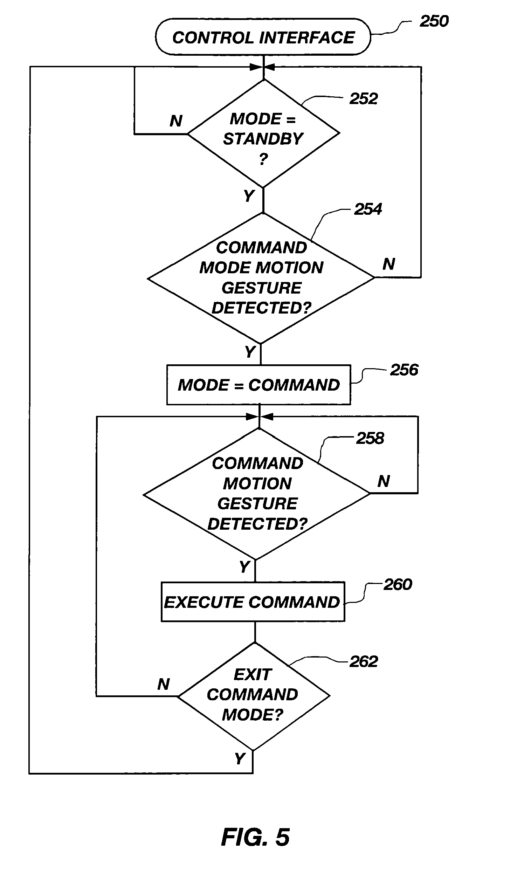

FIG. 5 is a flowchart illustrating a method for controlling an interface through motion gestures, in accordance with an embodiment of the present invention. A method for controlling an interface through motion gestures includes entering a command mode when a motion gesture corresponding to a request to enter the command mode is detected in a first video segment while in standby mode. The method also includes executing an interface command corresponding to another motion gesture in a second video segment while the device controlled by the interface is in the command mode.

As stated, the interface of the communication device is controlled through an interface that is responsive to the detection and identification of motion gestures. A method 250 for controlling an interface through motion gestures includes determining 252 the current mode of the interface. When the communication device 12 is in standby mode, command mode motion gestures may be detected 254 by the control process 30 (FIG. 2) and user motion gesture detector 62 (FIG. 2). When a command mode motion gesture is detected 254, then the current mode is set 256 to command mode. When the communication device 12 is in command mode, command motion gestures may be monitored until detected 258. Upon the detection of a specific command, the command is executed 260 or alternatively, commands may be accumulated until all of the command information is present. An example of such an accumulation includes the accumulation of a text string that corresponds to an address or telephone number that the user desires to initiate. The command mode may be exited 262 when the selected command is executed or when the user exhibits a motion gesture corresponding to a request to exit the command mode.

While the present embodiments have described identification of a specific motion gesture for exiting the standby mode and entering the command mode, various other embodiments are also contemplated which would include a plurality of motion gestures that are directed to commands and implicitly invoke the command mode without requiring a separate specific motion gesture to initially invoke the command mode.

## Claims

1. (Original) A method for controlling an interface through motion gestures, comprising:
entering a command mode when a motion gesture corresponding to a request to enter said command mode is detected in a first video segment and a device controlled by said interface is in a standby mode; and
executing at least one interface command corresponding to at least one other motion gesture as detected in a second video segment while said device controlled by said interface is in said command mode.

2. (Original) The method of claim 1, further comprising exiting said command mode when a motion gesture corresponding to a request to exit said command mode is detected in a third video segment when said device controlled by said interface is in said command mode.

3. (Original) The method of claim 1, wherein said entering further comprises continuously monitoring a video segment while in said standby mode for said motion gesture corresponding to a request to enter said command mode.

4. (Original) The method of claim 1, wherein said at least one other motion gesture corresponding to said at least one interface command directly corresponds to said at least one interface command.

5. (Original) The method of claim 1, wherein said entering said command mode further comprises superimposing on a display a control panel including at least one selectable interface control corresponding to said at least one interface command.

6. (Original) The method of claim 5, wherein said at least one other motion gesture selects said at least one selectable interface control.

7. (Original) The method of claim 5, wherein said control panel includes functionality corresponding to a remote control configured to interact with said interface of said device.

8. (Original) A communication device, comprising:
an interface including standby and command modes for controlling said communication device; and
a user motion gesture detector configured to identify motion gestures of a user and direct said interface to transition from said standby mode to said command mode when said motion gestures in a first video segment correspond to a request to enter said command mode.

9. (Original) The communication device of claim 8, wherein said user motion gesture detector is further configured to execute at least one interface command corresponding to at least one other motion gesture as detected in a second video segment while said device controlled by said interface is in said command mode.

10. (Original) The communication device of claim 8, further comprising a camera for capturing said first video segment.

11. (Original) The communication device of claim 8, wherein said communication device is configured as a video phone.

12. (Original) The communication device of claim 8, wherein said user motion gesture detector is further configured to exit said command mode when a motion gesture corresponding to a request to exit said command mode is detected in a third video segment when in said command mode.

13. (Original) The communication device of claim 8, wherein said motion gesture detector is further configured to continuously monitor a video segment while in said standby mode for said motion gesture corresponding to a request to enter said command mode.

14. (Original) The communication device of claim 8, wherein said user motion gesture detector is further configured to identify at least one other motion gesture corresponding to said at least one interface command.

15. (Original) The communication device of claim 8, further comprising a display configured to present a control panel including at least one selectable interface control corresponding to said at least one interface command.

16. (Original) The communication device of claim 15, wherein said user motion gesture detector is further configured wherein said at least one other motion gesture selects said at least one selectable interface control.

17. (Original) The communication device of claim 15, wherein said control panel includes at least some functionality corresponding to a remote control configured to interact with said interface of said device.

18. (Original) A video phone, comprising:
an interface for selecting one or more commands for controlling said video phone;
a camera for capturing video segments for analysis; and
a user motion gesture detector for controlling said interface through motion gestures.

19. (Original) The video phone of claim 18, wherein the interface includes a standby mode and a command mode and said user motion gesture detector is configured to direct said interface to enter said command mode when a motion gesture corresponding to a request to enter said command mode is detected in a first video segment when said interface is in a standby mode.

20. (Currently amended) The video phone of claim 19, wherein said interface is further configured to execute at least one interface command corresponding to at least one other motion gesture when detected in a second video segment.
